# EUROPÄISCHE PATENTSCHRIFT

(11) **EP 3 470 586 B1**
(45) Veröffentlichungstag und Bekanntmachung des Hinweises auf die Patenterteilung: **12.05.2021**
(21) Anmeldenummer: 17196634.4
(22) Anmeldetag: 16.10.2017
(51) Int. Cl.: F16K 1/34, F16K 47/08, E03B 9/02, F16K 1/42, F16K 1/54

(54) **ABSPERRORGAN ZUR VERWENDUNG IN EINEM HYDRANTEN, HYDRANT UND HAUPTVENTILSITZ**
SHUT-OFF DEVICE FOR USE IN A HYDRANT, HYDRANT AND MAIN VALVE SEAT
OBTURATEUR POUR UTILISATION DANS UNE BOUCHE D'INCENDIE, BOUCHE D'INCENDIE ET SIÈGE DE SOUPAPE PRINCIPAL

(43) Veröffentlichungstag der Anmeldung: 17.04.2019
(73) Patentinhaber: vonRoll infratec (investment) ag, 6300 Zug (CH)
(72) Erfinder: WENGER, Sascha, 4702 Oensingen (CH)
(74) Vertreter: Troesch Scheidegger Werner AG

(56) Entgegenhaltungen:
- EP-A1- 0 463 702
- EP-A1- 2 218 838
- DE-A1- 4 243 756
- DE-B3- 10 309 472

## Beschreibung

Die vorliegende Erfindung betrifft ein Absperrorgan zur Verwendung in einem Hydranten, einen Hydranten und einen Hauptventilsitz.

Hydranten sind mit einem Wasserverteilungssystem verbunden und stellen eine Armatur zur Entnahme von Wasser dar, um somit der Feuerwehr als auch öffentlichen und privaten Nutzern die Wasserentnahme aus dem Wasserverteilungssystem zu ermöglichen. Der Netzdruck im Wasserverteilungssystem beträgt typischerweise ca. 6 - 9 bar. Hydranten umfassen ein Steigrohr mit einem Innenraum und einer Aussenseite, wobei das Wasserverteilungssystem üblicherweise über ein bodenseitiges Einlaufrohr mit dem Innenraum verbunden ist. Die Wasserentnahme erfolgt über seitliche Anschlüsse aus dem Innenraum.

Zum Öffnen und Schliessen von Hydranten sind Absperrorgane bekannt, welche im Bereich oder nahe des Einlaufrohres angeordnet sein können. Absperrorgane sind z.B. Hydrantenhauptventile, die einen axial verstellbaren Hauptventilkörper umfassen, welcher mit einer Dichtfläche des Hydranten abdichtend abschliessen kann. Alternativ kann der Hauptventilkörper mit einer Dichtfläche eines entnehmbar in den Hydranten einsetzbaren Hauptventilsitzes abdichtend abschliessen. Der Hauptventilkörper ist ein Abdichtelement, welches in einer Schliessstellung mit der Dichtfläche des Hydranten oder Hauptventilsitzes abdichtet P216110 und in einer Offenstellung eine Verbindung zwischen dem bodenseitigen Einlaufrohr und dem Innenraum des Steigrohrs freigibt. Hierbei kann der Hauptventilkörper mit einer Ventilstange gekoppelt sein, über welche der Hauptventilkörper von der Schliessstellung in die Offenstellung und umgekehrt verstellbar ist. Die Ventilstange ist meist axial im Steigrohr des Hydranten angeordnet und kann manuell über ein Betätigungselement, z.B. ein Spindeltrieb, verstellt werden. Hierbei kann eine manuelle Umdrehung mittels des Betätigungselements in eine axiale Verstellung überführt werden, über welche die Ventilstange und der hiermit gekoppelte Hauptventilkörper axial herauf und herunter geführt werden.

Ein Problem im Stand der Technik besteht darin, dass beim Schliessen des Hydranten Druckstösse im Wasserverteilungssystem auftreten können. Die Intensität eines Druckstosses steigt hierbei mit zunehmend raschem Schliessen des Absperrorgans an. Durch die Druckstossproblematik können Rohrbrüche im Wasserverteilungssystem auftreten, welches schwerwiegende Folgen nach sich zieht. Neben dem Problem des hohen Wasserverlustes im Wasserverteilungssystem und des abnehmenden Wasserdrucks, treten nämlich zudem Probleme hinsichtlich einer Trinkwasserverschmutzung sowie Schäden an Gelände oder Strassen auf. Hohe Druckstösse können ebenso ein Platzen von z.B. einem Feuerwehr-Löschschlauch zur Folge haben. Durch die Druckstösse besteht auch die Gefahr, dass Wasser aus dem Schlauch zurück in das Wasserverteilungssystem gedrückt werden kann, wodurch Schmutzwasser und/oder Löschschaum ins Trinkwasser gelangen können. Es ist zu erwähnen, dass die Druckstösse ebenso beim Öffnen des Hydranten auftreten können.

Zur Lösung des Problems ist es im Stand der Technik bekannt, dass das Absperrorgan des Hydranten langsam geschlossen bzw. langsam geöffnet werden soll. Hierzu wird im Stand der Technik z.B. vorgeschlagen, beim Schliessen des Hydranten besonders die letzten Umdrehungen bzw. die letzte Umdrehung zum Schliessen des Absperrorgans langsam vorzunehmen, da die grösste Veränderung in der Wassermenge dann auftritt, wenn das Ventil fast geschlossen ist. Das Vorgenannte gilt ebenso beim Öffnen des Hydranten. Ein Problem dieser Lösung besteht allerdings darin, dass diese Massnahme z.B. bei einem dringenden Löscheinsatz in Vergessenheit geraten kann oder aber z.B. durch unzureichende Instruktion des Bedieners gar nicht erst bekannt war. So können die Druckstösse durch Bedienung durch ungeschultes Personal auftreten.

Druckschrift DE 103 09 472 B3 offenbart ein Ventilgehäuse, welches mit Entwässerungsbohrungen versehen ist.

Druckschrift EP 0 463 702 A1 offenbart einen Hydranten mit einem Hauptventilkörper, dessen Unterseite mit einem ringförmigen Vorsprung versehen ist.

Druckschrift DE 42 43 756 A1 offenbart einen Hydranten mit einem Hauptventilkörper, welcher gegen einen Ventilsitz und zugleich einer Schwimmerkugel abdichtet.

Druckschrift EP 2 218 838 A1 offenbart einen Hydranten mit einer Ventilanordnung, bei welcher die Stirnfläche eines Rohrs bogenförmig ausgebildet ist.

Es ist daher Aufgabe der vorliegenden Erfindung, ein Absperrorgan vorzuschlagen, welches keine Druckstösse verursacht. Es ist ferner Aufgabe der vorliegenden Erfindung, einen Hydranten mit einem solchen Absperrorgan, als auch einen Hauptventilsitz für ein solches Absperrorgan vorzuschlagen.

Die zuvor genannte Aufgabe wird durch ein Absperrorgan gemäss dem unabhängigen Anspruch 1, einen Hydranten gemäss dem unabhängigen Anspruch 12, sowie einen Hauptventilsitz gemäss dem unabhängigen Anspruch 16 gelöst. Weitere vorteilhafte Merkmale ergeben sich aus den abhängigen Ansprüchen.

Erfindungsgemäss wird die vorgenannte Aufgabe gelöst durch ein Absperrorgan eines Hydranten, wobei das Absperrorgan einen Hauptventilkörper und einen Dichtungssitz umfasst, welche in gegenseitig abdichtende Anlage bringbar sind, wobei der Dichtungssitz einen Innenumfang aufweist, der wenigstens abschnittsweise mit einer Ausnehmung versehen ist, wobei die Ausnehmung mit veränderlicher Tiefe in den Dichtungssitz hinein eingetragen ist. Ferner ist die Ausnehmung in einem Abschnitt des Dichtungssitzes ausgebildet, welcher von dem Hauptventilkörper zum Öffnen und Schliessen des Absperrorgans überfahrbar ist. Das erfindungsgemässe Absperrorgan umfasst einen Dichtungssitz, welcher mit einer Ausnehmung versehen ist, die in einem Innenflächenabschnitt des Dichtungssitzes bzw. einem Innenumfangsabschnitt des Dichtungssitzes mit veränderlicher Tiefe in den Dichtungssitz eingetragen ist. Sobald der Hauptventilkörper von z.B. einer Offenstellung in eine Schliessstellung des Hydranten verstellt wird, überfährt der Hauptventilkörper jenen Abschnitt des Dichtungssitzes mit der eingetragenen Ausnehmung. Im Bereich dieser Verstellung des Hauptventilkörpers in Relation zur Dichtfläche fliesst das Wasser dann mit einem reduzierten Volumen über die sich über die Ausnehmung insgesamt noch eröffnende Querschnittsfläche in z.B. das Steigrohr des Hydranten. Durch die Formgebung der Ausnehmung kann sich diese insgesamt eröffnende Querschnittsfläche bei einem weiteren Verstellen des Hauptventilkörpers in Richtung zur Schliessstellung stetig verkleinern, wodurch auch das durchströmende Wasservolumen stetig weiter reduziert wird. Mit fortschreitendem Verstellen des Hauptventilkörpers in Richtung zur Schliessstellung gelangt der Hauptventilkörper schliesslich umfänglich in vollständige Anlage mit einem Abschnitt, der nicht mit der Ausnehmung versehen ist. In dieser Stellung ist das Absperrorgan vollständig geschlossen.

Der Übergang des Hauptventilkörpers von der Offenstellung in die Schliessstellung entlang des Dichtungssitzes im Verlauf des Überfahrens des Abschnitts mit der eingetragenen Ausnehmung kann als sanftes Schliessen definiert werden, da hierbei das Absperrorgan nicht abrupt schliesst, wie dies im Stand der Technik der Fall ist. Im Stand der Technik wird nämlich hingegen kurz vor Erreichen der Schliessstellung ein sich umfänglich eröffnender Schlitz zwischen einem Abschnitt des Hauptventilkörpers und des Dichtungssitzes, durch welchen Schlitz das Wasser z.B. ins Steigrohr strömt, bei auch nur einer leichten axialen Verstellung des Hauptventilkörpers in Richtung zur Schliessstellung (auch als Umdrehung eines Betätigungselements zum Schliessen eines Hydranten bezeichnet) abrupt geschlossen, woraus die nachteiligen Druckstösse resultieren. Entgegen dem Stand der Technik erlaubt die vorliegende Erfindung jedoch ein sanftes Schliessen des Hydranten, auch durch ungeschultes Personal, ohne dass Druckstösse auftreten. Die gleichen Vorteile der vorliegenden Erfindung stellen sich auch beim Öffnen des Hydranten ein.

Die Ausnehmung ist in einem Abschnitt des Dichtungssitzes ausgebildet, welcher von dem Hauptventilkörper zum Öffnen und Schliessen des Absperrorgans überfahrbar ist. Der mit der Ausnehmung versehene Abschnitt des Dichtungssitzes kann als Abschnitt zum sanften Schliessen bzw. Öffnen des Absperrorgans bezeichnet werden. Nachdem der Hauptventilkörper diesen Abschnitt mit der Ausnehmung überfahren hat, gelangt der Hauptventilkörper in vollständig umfänglicher Anlage mit einem Abschnitt, welcher mit keiner Ausnehmung versehen ist, und dichtet somit zuverlässig ab.

Die Ausnehmung ist mit veränderlicher Tiefe in den Dichtungssitz hinein eingetragen. In einem Beispiel kann die Tiefe, mit der die Ausnehmung in den Dichtungssitz hinein eingetragen ist (bezogen auf die axiale Ausrichtung der zylindrischen Dichtfläche), in Richtung zur Schliessstellung des Absperrorgans abnehmen. Die Ausnehmung kann, in dieser Richtung in die Schliessstellung betrachtet, stufenfrei, bzw. kontinuierlich in einen Abschnitt übergehen, der ohne Ausnehmung konfiguriert ist. Die Ausnehmung kann in radialer Richtung betrachtet (ausgehend von der Mittenachse der zylindrischen Dichtfläche) unterschiedlich tief in den Dichtungssitz eingetragen sein. Mit anderen Worten, ein Abschnitt der Ausnehmung, welche mit variabler Tiefe in den Dichtungssitz eingetragen ist, kann bei Betrachtung einer jeweiligen axialen Verstellung des Hauptventilkörpers (in Relation zur Achse des Dichtungssitzes) als eine jeweilige Querschnittsfläche definiert werden, durch welche Wasser strömt - auch als sich eröffnende Querschnittsfläche bezeichnet. Die sich jeweils eröffnende Querschnittsfläche kann somit in Relation zur axialen Verstellung des Hauptventilkörpers stehen. Mit fortschreitender Verstellung des Hauptventilkörpers in Richtung zur Schliessstellung nimmt die sich eröffnende Querschnittsfläche zunehmend ab und nimmt schliesslich den Wert Null an. Durch die variable Tiefe der Ausnehmung kann zusätzlich ein sanftes Schliessen, bzw. Öffnen realisiert werden, wodurch Druckstösse verhindert werden. Die Ausnehmung kann mit einer Tiefe in den Dichtungssitz eingetragen sein, welche linear oder nichtlinear variiert.

In einer bevorzugten Ausführung des Absperrorgans ist die Ausnehmung am Innenumfang des Dichtungssitzes als durchgehende Ausnehmung ausgebildet. Das Profil der Ausnehmung kann durchgehend bzw. unterbrechungsfrei sein. Eine solche Ausnehmung kann einen reduzierten Aufwand zur Herstellung gestatten. Hierdurch können Herstellungskosten reduziert werden.

In einer alternativen Ausführung des Absperrorgans umfasst die Ausnehmung am Innenumfang des Dichtungssitzes mehrere Teilausnehmungen. Somit kann eine feinere Dosierung des durch die Teilausnehmungen (und somit insgesamt durch die Ausnehmung) durchströmenden Wassers erzielt werden. Es ist zu erwähnen, dass mit dem Wortlaut "Ausnehmung" eine zusammenhängende, bzw. durchgehende Ausnehmung, als auch eine mit Unterbrechungen versehene Ausnehmung (mehrere separate Ausnehmungen), hier als Teilausnehmungen bezeichnet, gemeint sein kann. In einer bevorzugten Ausführung des Absperrorgans sind die Teilausnehmungen umfänglich voneinander gleichmässig beabstandet.

In einer bevorzugten Ausführung des Absperrorgans erstreckt sich die Ausnehmung entlang der Axialrichtung des Dichtungssitzes unterschiedlich weit. Wie zuvor erwähnt, kann die Ausnehmung mehrere Teilausnehmungen umfassen. Somit kann sich z.B. mindestens eine der Teilausnehmungen entlang der Axialrichtung des Dichtungssitzes weiter erstrecken als wenigstens eine weitere der Teilausnehmungen. Beim Schliessen des Absperrorgans strömt dann immer noch Wasser durch die wenigstens eine Teilausnehmung, welche sich weiter in den Dichtungssitz erstreckt, während hingegen die Wasserzufuhr bei der wenigstens einen weiteren Teilausnehmung bereits abgesperrt ist. Hierdurch kann eine weitere Feindosierung des durchströmenden Wasservolumens erzielt werden.

In einer bevorzugten Ausführung des Absperrorgans ist die Ausnehmung am Innenumfang des Dichtungssitzes bogenförmig ausgebildet. In einem Beispiel kann der Dichtungssitz mit mehreren bogenförmigen Teilausnehmungen versehen sein. In einem weiteren Beispiel kann das Profil der Ausnehmung einem bogenförmigen Verlauf folgen, auch als wellenförmiger Verlauf bezeichnet. Der wellenförmige Verlauf eröffnet beim Öffnen und Schliessen des Absperrorgans eine bereichsweise variable Querschnittsfläche, durch welche das Wasser strömt. Die variable Querschnittsfläche kann in Relation zur Verstellung des Hauptventilkörpers stehen. Hierdurch kann das durchströmende Wasservolumen bis zum vollständigen Schliessen des Absperrorgans sanft reduziert werden, wodurch die Gefahr von Druckstössen reduziert wird. Ebenso kann das durchströmende Wasservolumen beim Öffnen des Absperrorgans auch sanft erhöht werden, wodurch ebenfalls die Gefahr von Druckstössen reduziert wird. In einem Beispiel kann die bogenförmig ausgebildete Ausnehmung wenigstens abschnittsweise einer Funktion von einem Sinus-Kurvenverlauf folgen. In einem Beispiel kann die bogenförmige Ausnehmung zwei Halbbögen aufweisen, welche in gleicher Ausrichtung zueinander gegenüberliegen. In diesem Beispiel können sich die beiden Bögen entlang der Axialrichtung des Dichtungssitzes unterschiedlich weit erstrecken, bzw. unterschiedliche Hochpunkte haben. Beim Schliessen des Absperrorgans strömt dann immer noch Wasser durch den Halbbogen mit der weitesten Erstreckung, während die Wasserzufuhr durch den anderen, jeweils gegenüberliegenden Halbbogen bereits abgesperrt ist. Hierdurch kann eine weitere Feindosierung des durchströmenden Wasservolumens erzielt werden.

In einer Ausführung des Absperrorgans weist die Ausnehmung am Innenumfang des Dichtungssitzes geradlinige Abschnitte auf. In einer Ausführung des Absperrorgans ist die Ausnehmung keilförmig, dreieckförmig, trapezförmig und/oder sägezahnförmig ausgebildet. Soweit sinnvoll, sind weitere geometrische Formen möglich. In einem Beispiel können sich Teilausnehmungen mit geradlinigen Abschnitten unterschiedlich weit in Axialrichtung des Dichtungssitzes erstrecken. Beim Schliessen des Absperrorgans strömt dann immer noch Wasser durch wenigstens eine der Teilausnehmungen, z.B. jeweils dreieckförmige, bzw. keilförmige Teilausnehmungen, welche sich weiter erstreckt als wenigstens eine weitere der Teilausnehmungen, über welche hinweg die Wasserzufuhr bereits abgesperrt ist. Hierdurch kann eine weitere Feindosierung des durchströmenden Wasservolumens erzielt werden.

In einer bevorzugten Ausführung des Absperrorgans ist der Dichtungssitz dazu konfiguriert, einstückig mit einem Hydrantenkörper eines Hydranten ausgebildet zu werden. Der Dichtungssitz kann z.B. beim Giessen eines Bauteils des Hydranten einstückig mit dem Material des Hydranten ausgebildet werden. In einer Ausführung des Absperrorgans ist der Dichtungssitz dazu konfiguriert, einstückig mit einem Steigrohr des Hydranten ausgebildet zu werden. Durch die einstückige Ausbildung des Dichtungssitzes im Verlauf der Herstellung des Steigrohrs von dem Hydranten, z.B. beim Giessen des Steigrohrs, können Kosten eingespart werden.

In einer alternativen Ausführung umfasst das Absperrorgan ferner einen Hauptventilsitz, welcher als der Dichtungssitz konfiguriert ist. Der Hauptventilsitz kann ein Bauteil sein, welches im Absperrorgan, z.B. ein Hauptventilabschnitt eines Hydranten, entnehmbar eingesetzt werden kann. Die Innenfläche des Hauptventilsitzes, bzw. dessen Dichtfläche, ist mit der zuvor beschriebenen Ausnehmung versehen.

Die Erfindung betrifft ebenfalls einen Hydranten, umfassend ein Absperrorgan, welches einen Hauptventilkörper und einen Dichtungssitz umfasst, welche in gegenseitig abdichtende Anlage bringbar sind, wobei der Dichtungssitz einen Innenumfang aufweist, der wenigstens abschnittsweise mit einer Ausnehmung versehen ist, wobei die Ausnehmung mit veränderlicher Tiefe in den Dichtungssitz hinein eingetragen ist und in einem Abschnitt des Dichtungssitzes ausgebildet ist, welcher von dem Hauptventilkörper zum Öffnen und Schliessen des Absperrorgans überfahrbar ist. Es ist somit ein Hydrant geschaffen, welcher sanft geöffnet und geschlossen werden kann, wodurch nachteilhafte Druckstösse eliminiert werden. In einer Ausführung des Hydranten ist der Dichtungssitz einstückig mit einem Hydrantenkörper des Hydranten ausgebildet. In dieser Konfiguration ist ein Abschnitt, bzw. Bauteil, des Hydranten als Dichtungssitz selber ausgebildet. In einer Ausführung umfasst der Hydrant ein Steigrohr, wobei der Dichtungssitz und das Steigrohr einstückig ausgebildet sind. In dieser Konfiguration ist ein Abschnitt des Steigrohrs als Dichtungssitz selber ausgebildet. Die vorgenannten Konfigurationen erlauben Kosteneinsparungen. Beispielsweise wird der Dichtungssitz beim Giessen des Steigrohrs hierin ausgebildet.

In einer alternativen Ausführung umfasst der Hydrant ferner einen Hauptventilsitz, welcher als der Dichtungssitz konfiguriert ist. Die Innenfläche des Hauptventilsitzes ist mit der zuvor beschriebenen Ausnehmung versehen. Der Hauptventilsitz kann vorteilhafterweise ausgewechselt werden, beispielsweise infolge von Verschleiss oder geänderten Anforderungen. Somit ist der erfindungsgemässe Hydrant besonders wartungsfreundlich und hat gleichzeitig die Eigenschaft, dass er frei von Druckstössen geöffnet und geschlossen werden kann.

Die Erfindung ist ebenfalls auf einen Hauptventilsitz für einen Hydranten gerichtet, wobei der Hauptventilsitz in einem Abschnitt eines Absperrorgans des Hydranten derart entnehmbar einsetzbar ist, dass der Hauptventilsitz und ein im Hydranten umfasster Hauptventilkörper in gegenseitig abdichtende Anlage bringbar sind, wobei der Hauptventilsitz einen Innenumfang aufweist, der wenigstens abschnittsweise mit einer Ausnehmung versehen ist, wobei die Ausnehmung mit veränderlicher Tiefe in den Hauptventilsitz hinein eingetragen ist und in einem Abschnitt des Hauptventilsitzes ausgebildet ist, welcher von dem Hauptventilkörper zum Öffnen und Schliessen des Absperrorgans überfahrbar ist. Es ist somit ein Hauptventilsitz geschaffen, welcher beispielsweise infolge von Verschleiss einfach ausgetauscht werden kann. Der erfindungsgemässe Hauptventilsitz erlaubt es, dass ein hiermit bestückter Hydrant z.B. auch durch ungeschultes Personal geöffnet und geschlossen werden kann, ohne dass hierbei Druckstösse auftreten.

Lediglich diejenigen Kombinationen von Ausführungsvarianten sind ausgeschlossen, die durch die Kombination zu Widersprüchen führen würden.

Im Folgenden wird die vorliegende Erfindung anhand von in Zeichnungen dargestellten Ausführungsbeispielen weiter erläutert. Dabei zeigen:
- Fig. 1a-e: mehrere Schnittansichten von einem Absperrorgan eines Hydranten in einer ersten Ausführungsform;
- Fig. 2a-e: mehrere Schnittansichten von einem Absperrorgan eines Hydranten in einer zweiten Ausführungsform;
- Fig. 3a-e: mehrere Schnittansichten von einem Absperrorgan eines Hydranten in einer dritten Ausführungsform;
- Fig. 4a-e: mehrere Schnittansichten von einem Absperrorgan eines Hydranten in einer vierten Ausführungsform;
- Fig. 5a-e: mehrere Schnittansichten von einem Absperrorgan eines Hydranten in einer fünften Ausführungsform;
- Fig. 6: eine Schnittansicht von einem Absperrorgan eines Hydranten in einer sechsten Ausführungsform; und
- Fig. 7a-c: eine Schnittansicht von einem Absperrorgan eines Hydranten in einer siebten Ausführungsform.

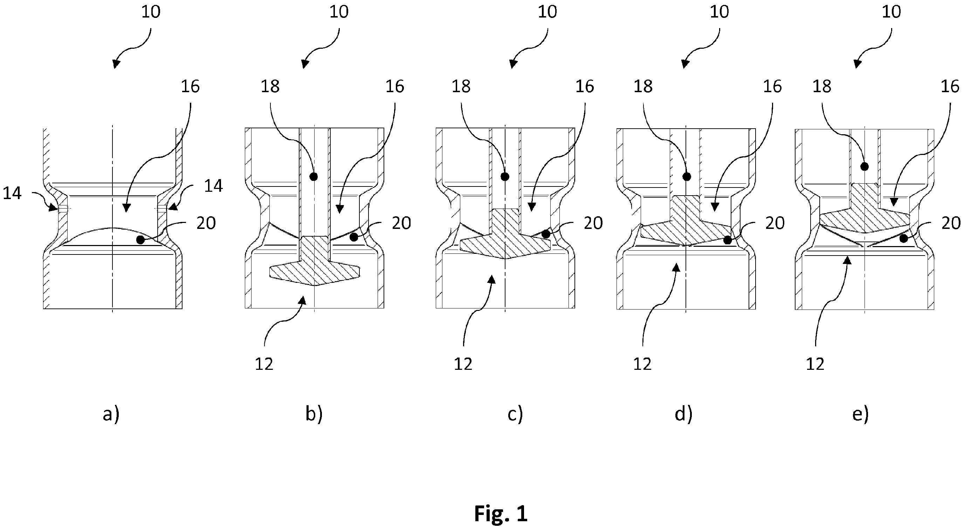

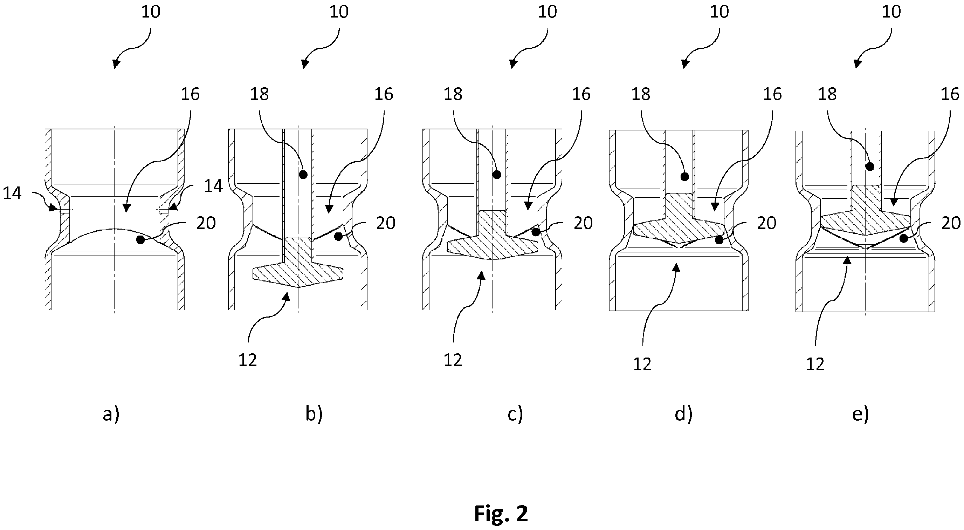

Die Figuren 1 bis 5 zeigen beispielhaft fünf Ausführungsformen eines erfindungsgemässen Absperrorgans 10 in jeweils fünf Ansichten. Hierbei zeigen die jeweils mit "Fig. a)" gekennzeichneten Figuren, also Figuren 1a, 2a,...,5a, jeweils eine Ansicht der Absperrorgane 10 der jeweiligen Ausführungsform ohne einen Hauptventilkörper, um hierdurch eine deutliche Ansicht zu erhalten. Die weiteren Figuren, d.h. "Figuren b)-e)", zeigen die Absperrorgane 10 der jeweiligen Ausführungsform in jeweils unterschiedlichen Stellungen eines Hauptventilkörpers 12. Es ist zu erwähnen, dass die jeweiligen "Figuren a)" das Absperrorgan 10 in einer Schnittansicht entlang einer Mittenachse von zwei gegenüberliegenden Entwässerungsbohrungen 14 zeigen, während die "Figuren b)-e)" jeweils eine hierzu um 90° gedrehte Schnittansicht zeigen.

Das Absperrorgan 10 umfasst einen Dichtungssitz 16, wobei der Hauptventilkörper 12 und der Dichtungssitz 16 in gegenseitig abdichtende Anlage bringbar sind. Mit anderen Worten, kann der Hauptventilkörper 12 derart verstellt werden, dass er mit dem Dichtungssitz 16 umfänglich abdichtet. Die "Figuren b)-e)" zeigen das Absperrorgan 10 ausgehend von einer Offenstellung (jeweils "Figuren b)": Absperrorgan vollständig offen) über jeweils zwei Zwischenstellungen (jeweils "Figuren c,d)") (in den folgenden Ausführungsformen detaillierter erläutert) bis hin zu einer Schliessstellung (jeweils "Figuren e)": Absperrorgan vollständig geschlossen).

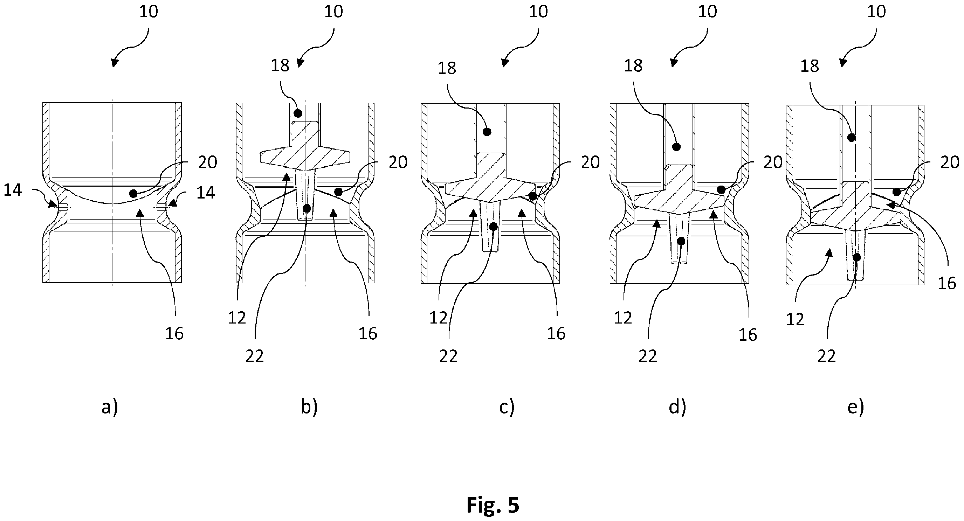

Die in Figuren 1-4 gezeigten Ausführungsformen betreffen ein Absperrorgan 10, welches in Strömungsrichtung des Wassers geschlossen wird (in den genannten Figuren 1-4 in Richtung von unten nach oben), während die in Figuren 5-7 gezeigten Ausführungsformen jeweils ein Absperrorgan 10 betreffen, welches entgegen der Strömungsrichtung des Wassers geschlossen wird (in den genannten Figuren 5-7 in Richtung von oben nach unten). Der Hauptventilkörper 12 wird über eine Ventilstange 18 axial in die Schliessstellung (hier z.B. in den genannten Figuren 1-4 in Richtung nach oben) oder in die Offenstellung (hier z.B. in den genannten Figuren 1-4 in Richtung nach unten) verstellt. Obwohl bei den in Figuren 1-4 gezeigten Ausführungsformen nicht gezeigt, kann der Hauptventilkörper 12 mit Flügeln (z.B. zwei gegenüberliegende Flügel) versehen sein, welche sich am Dichtungssitz 16 abstützen, um den Hauptventilkörper 12 somit zuverlässig axial entlang der Mittenachse zu führen. In den genannten Ausführungsformen, bei welchen das Absperrorgan 10 in Strömungsrichtung des Wassers geschlossen wird, können sich die Flügel in Relation zum Hauptventilkörper 12 nach oben erstrecken, um somit zuverlässig mit dem Dichtungssitz 16 in Anlage zu gelangen.

Bei den jeweils gezeigten Absperrorganen 10 ist der Dichtungssitz 16 am Innenumfang von einem verengten Abschnitt des Absperrorgans 10 selber vorgesehen. Mit anderen Worten, bildet ein Innenflächenabschnitt des Absperrorgans 10 selber den Dichtungssitz 16. Das Absperrorgan 10 kann Teil eines Hydranten, z.B. ein Steigrohr, sein. Obwohl nicht gezeigt, kann alternativ ein austauschbarer Hauptventilsitz vorgesehen sein, dessen Innenumfangsfläche mit dem Dichtungssitz versehen ist. Der Hauptventilsitz kann in den Hydranten, z.B. in das Steigrohr, eingesetzt werden. Es ist zu erwähnen, dass mit dem Ausdruck "Innenumfang des Dichtungssitzes" die Innenfläche, bzw. Innenumfangsfläche vom Dichtungssitz selber gemeint ist.

Die jeweiligen Dichtungssitze 16 sind abschnittsweise mit einer Ausnehmung 20 versehen, über welche das Wasser in der Zwischenstellung des Hauptventilkörpers 12 weiterhin strömen kann. Hierauf wird im Folgenden bei Betrachtung der einzelnen Ausführungsformen detaillierter eingegangen.

Im Folgenden wird auf die einzelnen Ausführungsformen gesondert eingegangen. Über die Zeichnung hinweg sind gleichen oder gleichwertigen Bauteilen oder Ausformungen die gleichen Bezugszeichen zugesprochen.

Der in der Ausführungsform von Figuren 1a-e gezeigte Dichtungssitz 16 ist mit einer hierin eingetragenen Ausnehmung 20 bzw. Ausformung versehen, welche keilförmig ausgebildet bzw. ausgeformt sein kann. In der gezeigten Ausführungsform ist die Ausnehmung 20 z.B. durch zwei Keile bzw. eine keilförmige Ausnehmung gebildet. Die keilförmige Ausnehmung kann durchgängig ausgenommen sein. Alternativ sind keilförmige Ausnehmungen bzw. Ausformungen durch Abschnitte des Dichtungssitzes unterbrochen und können somit zwei Teilausnehmungen bilden. Unabhängig davon, ob mehrere "unterbrochene" Teilausnehmungen vorliegen oder nicht, wird hier einheitlich von "Ausnehmung" gesprochen.

Die keilförmige Ausnehmung 20 ist in einem Abschnitt des Dichtungssitzes 16 ausgebildet, der von dem Hauptventilkörper 12 beim Schliessen des Absperrorgans 10 überfahren wird (siehe Figuren 1c,d), wobei der Hauptventilkörper 12 dann in einem weiteren Abschnitt des Dichtungssitzes 16 zum Liegen kommt. In diesem weiteren Abschnitt gelangt der Hauptventilkörper 12 voll umfänglich mit dem Dichtungssitz 16 in Anlage (siehe Fig. 1e: Schliessstellung). Während der Hauptventilkörper 12 den Abschnitt des Dichtungssitzes 16 mit der keilförmigen Ausnehmung 20 überfährt, fliesst das Wasser über eine insgesamt veränderliche Querschnittsfläche, die insgesamt zwischen dem Umfang des Hauptventilkörpers 12 und der keilförmigen Ausnehmung 20 eröffnet ist. Durch die Formgebung der keilförmigen Ausnehmung 20 nimmt diese Querschnittsfläche mit zunehmender Verstellung des Hauptventilkörpers 12 in Richtung zur Schliessstellung weiter ab. Somit wird auch das durchströmte Wasservolumen stetig reduziert. Die Fig. 1c zeigt das Absperrorgan 10 in einem offenen Zustand, wobei sich der Hauptventilkörper 12 bereits im Einflussbereich der Ausnehmung 20 vom Dichtungssitz 16 befindet, auch als "sanft schliessende" Geometrie bezeichnet.

In der hier gezeigten Ausführung erstreckt sich zudem ein Keil der keilförmigen Ausnehmung 20 weiter in den Dichtungssitz 16 hinein als der gegenüberliegende Keil, bzw. haben die beiden Keile unterschiedliche Hochpunkte. Mit anderen Worten, erstrecken sich die beiden Keile unterschiedlich weit in den Dichtungssitz 16 hinein. Hierdurch strömt über den sich weiter erstreckenden Keil auch dann noch Wasser, wenn der gegenüberliegende Keil bereits durch den Hauptventilkörper 12 vollständig abgesperrt ist. So ist in Fig. 1d das Absperrorgan 10 in einem teilweise geschlossenen Zustand gezeigt, wobei das Wasser in diesem Zustand nur noch einseitig (in der Fig. 1d über den Keil auf der linken Seite) strömt, woraus sich eine sanft schliessende Geometrie bzw. Konfiguration auf den letzten Umdrehungen bzw. auf der letzten Umdrehung zum Schliessen des Absperrorgans 10 einstellt. Die keilförmige Ausnehmung 20 erlaubt eine weitere Feindosierung der Wasserströmung auf den letzten Umdrehungen bzw. auf der letzten Umdrehung zum Schliessen des Absperrorgans 10.

Die Erfindung erlaubt, dass das über die Ausnehmung 20 durchgeleitete Wasservolumen auf den letzten Umdrehungen bzw. auf der letzten Umdrehung zum Schliessen des Absperrorgans 10 in einer bestimmten Relation stetig abnimmt und nicht abrupt abgesperrt wird, wie dies im Stand der Technik der Fall ist. Die vorliegende Erfindung verhindert somit wirksam das Auftreten von Druckstössen, und zwar auch dann, wenn der Hydrant von einem z.B. ungeschulten Personal bedient wird.

Die Figuren 2a-e zeigen eine zweite Ausführungsform des erfindungsgemässen Absperrorgans 10. In dieser Ausführung ist die Ausnehmung 20, welche in den Dichtungssitz 16 eingetragen ist, ebenfalls keilförmig ausgebildet. Im Gegensatz zu der in Figuren 1a-e gezeigten Ausführung, erstrecken sich die gegenüberliegenden Keile der Ausnehmung 20 jedoch gleich weit. Hierdurch wird das Absperrorgan 10 über die gegenüberliegenden Keile im Wesentlichen gleichzeitig geschlossen.

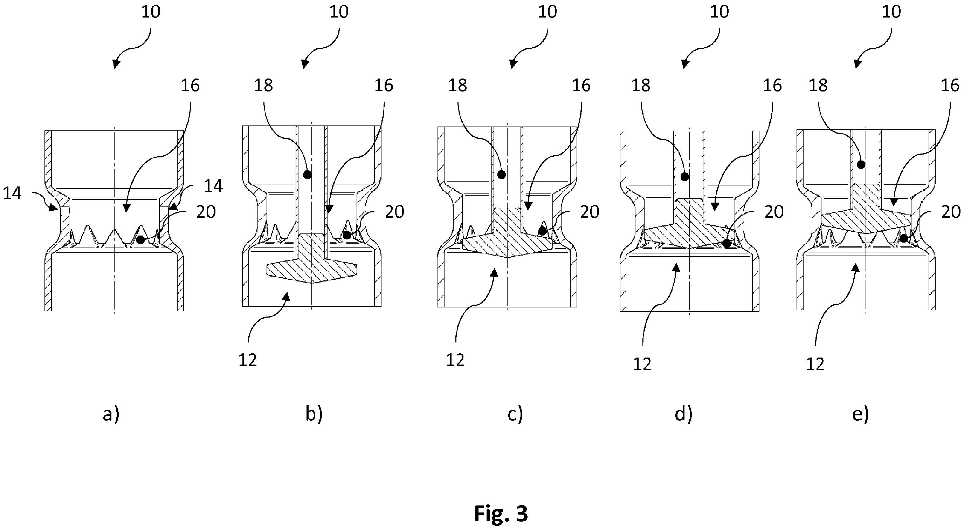

Die Figuren 3a-e zeigen eine dritte Ausführungsform des erfindungsgemässen Absperrorgans 10. In dieser Ausführung ist die Ausnehmung 20 durch mehrere Teilausnehmungen konfiguriert, welche keilförmig bzw. dreieckförmig, mit symmetrischen Formschrägen, ausgebildet sind. In dieser Ausführung können sich die Teilausnehmungen in Relation zueinander unterschiedlich weit in den Dichtungssitz 16 erstrecken. In einem Beispiel erstrecken sich jeweils benachbarte Teilausnehmungen unterschiedlich weit in den Dichtungssitz 16, wobei sich jede Teilausnehmung im Wesentlichen gleich weit in den Dichtungssitz 16 erstrecken kann, wie die jeweils übernächste Teilausnehmung. Selbstverständlich sind jegliche Kombinationen von Erstreckungen in den Dichtungssitz 16 möglich. Es kann auch möglich sein, dass sich alle Teilausnehmungen in Relation zueinander unterschiedlich weit in den Dichtungssitz 16 erstrecken. Wie in Figur 3 gezeigt, können entlang der Innenumfangsfläche des Dichtungssitzes 16 beispielsweise insgesamt zehn keilförmige Teilausnehmungen vorgesehen sein (aus darstellhaften Gründen sind in Fig. 3a nur fünf keilförmige Teilausnehmungen zu erkennen). Diese Teilausnehmungen erstrecken sich, ausgehend von ihrer Basis, vom unteren Ende des Dichtungssitzes 16, bzw. seitens des Wassereinlasses, in den Dichtungssitz 16 hinein, wobei sie sich stetig verjüngen und jeweils mit ihrer Spitze abschliessen. Die Teilausnehmungen können mit ihren Spitzen in jenen Abschnitt des Dichtungssitzes 16 glatt bzw. absatzfrei übergehen, welcher keine Ausnehmung aufweist. Die Spitzen der Teilausnehmungen enden z.B. in einem Abschnitt des Dichtungssitzes 16, welcher die Hälfte oder etwas weniger als die Hälfte der Gesamterstreckung vom Dichtungssitz 16 ausmacht. Somit kann z.B. gewährleistet werden, dass der Hauptventilkörper 12 mit jenem Abschnitt des Dichtungssitzes 16 in zuverlässige gegenseitige Anlage gelangt, welcher keine Ausnehmung aufweist, und das Absperrorgan 10 somit zuverlässig abgedichtet wird.

Bei der in Fig. 3c gezeigten Stellung des Hauptventilkörpers 12 in Relation zur Dichtfläche 16 befindet sich der Hauptventilkörper 12 im Einflussbereich der sanft schliessenden Sitzgeometrie. In dieser Stellung strömt das Wasser durch die sich insgesamt eröffnende Querschnittsfläche aller keilförmigen Teilausnehmungen. In Fig. 3d hat der Hauptventilkörper 12 die Teilausnehmungen so weit überfahren, dass das Wasser lediglich über die Spitzen jener Teilausnehmungen strömt, welche sich weiter in den Dichtungssitz 16 hinein erstrecken. In dem gezeigten Beispiel strömt das Wasser über die Spitze von jeweils jeder zweiten Teilausnehmung, welche sich im Wesentlichen gleich weit in den Dichtungssitz 16 hinein erstrecken. Mit anderen Worten, strömt das Wasser über jeweils die Spitze von jenen Teilausnehmungen, welche durch eine Teilausnehmung voneinander getrennt sind. Selbstverständlich können Teilausnehmung, welche sich im Wesentlichen gleich weit in den Dichtungssitz 16 hinein erstrecken, auch durch zwei oder mehr Teilausnehmungen voneinander getrennt sein. Es sind weitere Beispiele möglich, welche angeben, auf welche Weise Teilausnehmungen mit jeweils im Wesentlichen gleichen Erstreckungen in den Dichtungssitz 16 hinein kombiniert werden können. Beispielsweise können sich auch alle Teilausnehmungen in Relation zueinander unterschiedlich weit in den Dichtungssitz 16 hinein erstrecken. Dem oben aufgeführten Beispiel mit insgesamt zehn dreieckförmigen Teilausnehmungen folgend, strömt das Wasser somit nur noch über die sich eröffnende Querschnittsfläche an den Spitzen von fünf keilförmigen Teilausnehmungen. Somit erlaubt das Absperrorgan 10 eine weitere Feindosierung der Wasserströmung auf den letzten Umdrehungen bzw. auf der letzten Umdrehung zum Schliessen des Absperrorgans 10.

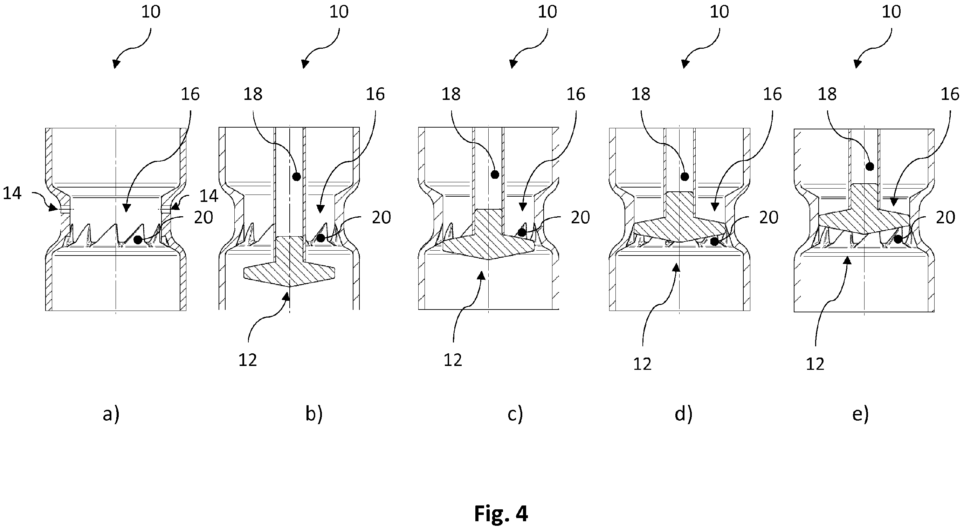

Die Figuren 4a-e zeigen eine vierte Ausführungsform des erfindungsgemässen Absperrorgans 10. In dieser Ausführung ist die Ausnehmung 20 durch mehrere Teilausnehmungen konfiguriert, welche hier keilförmig mit asymmetrischen Formschrägen, bzw. sägezahnförmigen Formschrägen ausgeformt sind. In dieser Ausführung erstrecken sich alle Teilausnehmungen gleich weit in den Dichtungssitz 16 hinein. Beispielsweise können auch hier entlang der Innenumfangsfläche vom Dichtungssitz 16 insgesamt zehn sägezahnförmige Teilausnehmungen vorgesehen sein, welche sich, mit ihrer Basis beginnend, vom unteren Ende des Dichtungssitzes 16, bzw. von der Seite des Wassereinlasses, so weit in den Dichtungssitz 16 hinein erstrecken, dass die Spitzen der Teilausnehmungen in einem Abschnitt des Dichtungssitzes 16 enden, welcher etwas weniger als die Hälfte der Gesamterstreckung vom Dichtungssitz 16 ausmacht.

Bei der in Fig. 4c gezeigten Stellung des Hauptventilkörpers 12 befindet sich dieser im Einflussbereich der sanft schliessenden Sitzgeometrie. In dieser Stellung strömt das Wasser durch die sich insgesamt eröffnende Querschnittsfläche aller sägezahnförmigen Teilausnehmungen. In Fig. 4d hat der Hauptventilkörper 12 den Dichtungssitz 16 so weit überfahren, dass alle Teilausnehmungen gleichzeitig geschlossen sind. Die sägezahnförmigen Formschrägen ermöglichen eine weitere Feindosierung der Wasserströmung auf den letzten Umdrehungen bzw. auf der letzten Umdrehung zum Schliessen des Absperrorgans 10.

Die Figuren 5a-e zeigen eine fünfte Ausführungsform des erfindungsgemässen Absperrorgans 10. In dieser Ausführung ist das Absperrorgan 10 entgegen der Strömungsrichtung des Wassers schliessend (in den Figuren von oben nach unten). Der Hauptventilkörper 12 ist mit zwei Flügeln 22 (in den Figuren ist nur ein Flügel 22 zu erkennen) versehen, welche sich am Dichtungssitz 16 abstützen, um den Hauptventilkörper 12 somit zuverlässig axial entlang der Mittenachse zu führen. In dieser Ausführungsform ist der Dichtungssitz 16 ebenfalls mit einer Ausnehmung 20 versehen, welche hier durch zwei keilförmige Teilausnehmungen konfiguriert ist, deren Formschrägen symmetrisch sind. Die beiden keilförmigen Teilausnehmungen erstrecken sich unterschiedlich weit in den Dichtungssitz 16, sodass das Absperrorgan 10 versetzt schliesst (siehe hierzu auch die Beschreibung zu Figuren 1a-e).

Bei der in Fig. 5c gezeigten Stellung des Hauptventilkörpers 12 befindet sich dieser im Einflussbereich der sanft schliessenden Sitzgeometrie. In dieser Stellung strömt das Wasser durch die sich insgesamt eröffnende Querschnittsfläche der beiden keilförmigen Teilausnehmungen. In Fig. 5d hat der Hauptventilkörper 12 den Dichtungssitz 16 so weit überfahren, dass das Wasser lediglich über die sich noch eröffnende Querschnittsfläche der einen keilförmigen Teilausnehmung (in der Figur die linke Teilausnehmung) strömt, welche sich weiter als die andere Teilausnehmung in den Dichtungssitz 16 hinein erstreckt. In der Fig. 5e ist der Hauptventilkörper 12 so weit verstellt, dass er vollständig in umfängliche Abdichtung mit dem Dichtungssitz 16 zum Liegen kommt und das Absperrorgan 10 somit vollständig geschlossen ist. Durch die Ausbildung des Dichtungssitzes 16 mit den beschriebenen keilförmigen Teilausnehmungen mit asymmetrischen Formschrägen ist eine weitere Feindosierung der Wasserströmung auf den letzten Umdrehungen bzw. auf der letzten Umdrehung zum Schliessen des Absperrorgans 10 ermöglicht.

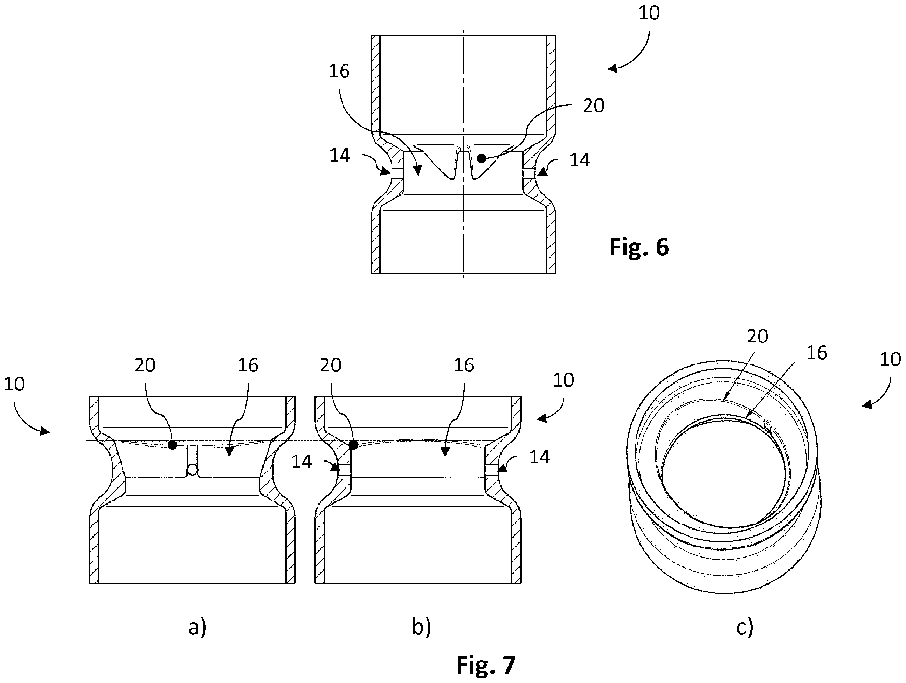

Fig. 6 zeigt eine Schnittansicht von einem Absperrorgan 10 eines Hydranten in einer sechsten Ausführungsform. In dieser Ausführung ist das Absperrorgan 10 ebenso derart konfiguriert, dass es entgegen der Wasserströmung geschlossen wird. Aus darstellhaften Gründen ist der Hauptventilkörper ausgelassen. Der Dichtungssitz 16 weist eine Ausnehmung 20 aus vier keilförmigen Teilausnehmungen (aus darstellhaften Gründen sind nur zwei keilförmige Teilausnehmungen gezeigt) mit asymmetrischen und spiegelverkehrten Formschrägen auf. Die keilförmigen Teilausnehmungen können eine variierende Tiefe haben, welche in Richtung zu den Spitzen der keilförmigen Teilausnehmungen hin stetig abnimmt und in den Abschnitt der umfänglich abdichtenden Fläche übergeht bzw. hierin im Wesentlichen glatt ausläuft. Die gezeigte Konfiguration lässt sich herstellungstechnisch besonders vorteilhaft und zuverlässig realisieren.

Figuren 7a-c zeigen das Absperrorgan 10 in einer siebten Ausführungsform. Hierbei zeigen Figuren 7a,b das Absperrorgan 10 in einer Schnittansicht, während Fig. 7c das Absperrorgan 10 in einer perspektivischen Ansicht zeigt. Aus darstellhaften Gründen ist der Hauptventilkörper ausgelassen. Das Absperrorgan 10 ist derart konfiguriert, dass es entgegen der Wasserströmung geschlossen wird. In dieser Ausführungsform bildet die sich eröffnende Querschnittsfläche des Dichtungssitzes 16 einen Übergang von einem kreisförmigen Querschnitt zu einer Ausnehmung 20 mit elliptischem Querschnitt. Durch die elliptische Formgebung der Ausnehmung 20 wird ermöglicht, dass das Wasservolumen in einem Übergangsbereich zwischen dem kreisförmigen Querschnitt und dem elliptischen Querschnitt stetig abnimmt, wenn dieser Übergangsbereich durch den Hauptventilkörper überfahren wird.

## Patentansprüche

1. Absperrorgan (10) zur Verwendung in einem Hydranten, wobei das Absperrorgan (10) einen Hauptventilkörper (12) und einen Dichtungssitz (16) umfasst, welche in gegenseitig abdichtende Anlage bringbar sind, wobei der Dichtungssitz (16) einen Innenumfang aufweist, der wenigstens abschnittsweise mit einer Ausnehmung (20) versehen ist, wobei die Ausnehmung (20) in einem Abschnitt des Dichtungssitzes (16) ausgebildet ist, welcher von dem Hauptventilkörper (12) zum Öffnen und Schliessen des Absperrorgans (10) überfahrbar ist, **dadurch gekennzeichnet, dass** die Ausnehmung (20) mit veränderlicher Tiefe in den Dichtungssitz (16) hinein eingetragen ist.

2. Absperrorgan (10) nach Anspruch 1, wobei die Ausnehmung (20) am Innenumfang des Dichtungssitzes (16) als durchgehende Ausnehmung (20) ausgebildet ist.

3. Absperrorgan (10) nach Anspruch 1, wobei die Ausnehmung (20) am Innenumfang des Dichtungssitzes (16) mehrere Teilausnehmungen umfasst.

4. Absperrorgan (10) nach Anspruch 3, wobei die Teilausnehmungen umfänglich voneinander gleichmässig beabstandet sind.

5. Absperrorgan (10) nach Anspruch 3 oder 4, wobei sich die Ausnehmung (20) entlang der Axialrichtung des Dichtungssitzes (16) unterschiedlich weit erstreckt.

6. Absperrorgan (10) nach einem der vorhergehenden Ansprüche, wobei die Ausnehmung (20) am Innenumfang des Dichtungssitzes (16) bogenförmig ausgebildet ist.

7. Absperrorgan (10) nach einem der vorhergehenden Ansprüche, wobei die Ausnehmung (20) am Innenumfang des Dichtungssitzes (16) geradlinige Abschnitte aufweist.

8. Absperrorgan (10) nach Anspruch 7, wobei die Ausnehmung (20) keilförmig, dreieckförmig, trapezförmig und/oder sägezahnförmig ausgebildet ist.

9. Absperrorgan (10) nach einem der vorhergehenden Ansprüche, wobei der Dichtungssitz (16) dazu konfiguriert ist, einstückig mit einem Hydrantenkörper eines Hydranten ausgebildet zu werden.

10. Absperrorgan (10) nach Anspruch 9, wobei der Dichtungssitz (16) dazu konfiguriert ist, einstückig mit einem Steigrohr des Hydranten ausgebildet zu werden.

11. Absperrorgan (10) nach einem der Ansprüche 1 bis 8, ferner umfassend einen Hauptventilsitz, welcher als der Dichtungssitz (16) konfiguriert ist.

12. Hydrant, umfassend ein Absperrorgan (10), welches einen Hauptventilkörper (12) und einen Dichtungssitz (16) umfasst, welche in gegenseitig abdichtende Anlage bringbar sind, wobei der Dichtungssitz (16) einen Innenumfang aufweist, der wenigstens abschnittsweise mit einer Ausnehmung (20) versehen ist wobei die Ausnehmung (20) in einem Abschnitt des Dichtungssitzes (16) ausgebildet ist, welcher von dem Hauptventilkörper (12) zum Öffnen und Schliessen des Absperrorgans (10) überfahrbar ist, **dadurch gekennzeichnet, dass** die Ausnehmung (20) mit veränderlicher Tiefe in den Dichtungssitz (16) hinein eingetragen ist.

13. Hydrant nach Anspruch 12, wobei der Dichtungssitz (16) einstückig mit einem Hydrantenkörper des Hydranten ausgebildet ist.

14. Hydrant nach Anspruch 12 oder 13, ferner umfassend ein Steigrohr, wobei der Dichtungssitz (16) und das Steigrohr einstückig ausgebildet sind.

15. Hydrant nach Anspruch 12, ferner umfassend einen Hauptventilsitz, welcher als der Dichtungssitz konfiguriert ist.

16. Hauptventilsitz für einen Hydranten, wobei der Hauptventilsitz in einem Abschnitt eines Absperrorgans des Hydranten derart entnehmbar einsetzbar ist, dass der Hauptventilsitz und ein im Hydranten umfasster Hauptventilkörper in gegenseitig abdichtende Anlage bringbar sind, wobei der Hauptventilsitz einen Innenumfang aufweist, der wenigstens abschnittsweise mit einer Ausnehmung versehen ist, wobei die Ausnehmung in einem Abschnitt des Hauptventilsitzes ausgebildet ist, welcher von dem Hauptventilkörper zum Öffnen und Schliessen des Absperrorgans überfahrbar ist, **dadurch gekennzeichnet, dass** die Ausnehmung mit veränderlicher Tiefe in den Hauptventilsitz hinein eingetragen ist.

## Claims

1. A shut-off element (10) for use in a hydrant, wherein the shut-off element (10) comprises a main valve body (12) and a sealing seat (16) which can be brought into mutually sealing contact, wherein the sealing seat (16) comprises an inner circumference which at least in sections is provided with a recess (20), wherein the recess (20) is formed in a section of the sealing seat (16) which can be traversed by the main valve body (12) for opening and closing the shut-off element (10), **characterized in that** the recess (20) is inscribed into the sealing seat (16) with a variable depth.

2. The shut-off element (10) according to claim 1, wherein the recess (20) on the inner circumference of the sealing seat (16) is formed as a continuous recess (20).

3. The shut-off element (10) according to claim 1, wherein the recess (20) on the inner circumference of the sealing seat (16) comprises a plurality of partial recesses.

4. The shut-off element (10) according to claim 3, wherein the partial recesses are evenly spaced from each other circumferentially.

5. The shut-off element (10) according to claim 3 or 4, wherein the recess (20) extends to different extents along the axial direction of the sealing seat (16).

6. The shut-off element (10) according to one of the preceding claims, wherein the recess (20) on the inner circumference of the sealing seat (16) is of arcuate shape.

7. The shut-off element (10) according to one of the preceding claims, wherein the recess (20) on the inner circumference of the sealing seat (16) comprises rectilinear sections.

8. The shut-off element (10) according to claim 7, wherein the recess (20) is formed in a wedge-shaped, triangular, trapezoidal and/or sawtooth-shaped manner.

9. The shut-off element (10) according to one of the preceding claims, wherein the sealing seat (16) is configured to be integrally formed with a hydrant body of a hydrant.

10. The shut-off element (10) according to claim 9, wherein the sealing seat (16) is configured to be formed integrally with a riser pipe of the hydrant.

11. The shut-off element (10) according to one of claims 1 to 8, further comprising a main valve seat which is configured as the sealing seat (16).

12. A hydrant, comprising a shut-off element (10), which comprises a main valve body (12) and a sealing seat (16) which can be brought into mutually sealing contact, wherein the sealing seat (16) comprises an inner circumference which at least in sections is provided with a recess (20), wherein the recess (20) is formed in a section of the sealing seat (16) which can be traversed by the main valve body (12) for opening and closing the shut-off element (10), **characterized in that** the recess (20) is inscribed into the sealing seat (16) with a variable depth.

13. The hydrant according to claim 12, wherein the sealing seat (16) is formed integrally with a hydrant body of the hydrant.

14. The hydrant according to claim 12 or 13, further comprising a riser pipe, wherein the sealing seat (16) and the riser pipe are formed integrally.

15. The hydrant according to claim 12, further comprising a main valve seat which is configured as the sealing seat.

16. A main valve seat of a hydrant, wherein the main valve seat is removably insertable into a section of a shut-off element of the hydrant in such a way that the main valve seat and a main valve body comprised by the hydrant are brought into mutual sealing contact, wherein the main valve seat comprises an inner circumference which at least in sections is provided with a recess, wherein the recess is formed in a section of the sealing seat which can be traversed by the main valve body for opening and closing the shut-off element, **characterized in that** the recess is inscribed into the sealing seat with a variable depth.

## Revendications

1. Organe d'arrêt (10) destiné à être utilisé dans une prise d'eau, l'organe d'arrêt (10) comprenant un corps de soupape principal (12) et un siège de joint (16) qui peuvent être amenés en contact étanche l'un avec l'autre, le siège de joint (16) présentant un pourtour intérieur qui est muni au moins par endroits d'un évidement (20), l'évidement (20) étant réalisé dans une section du siège de joint (16) et pouvant être franchi par le corps de soupape principal (12) pour ouvrir et fermer l'organe d'arrêt (10), **caractérisé en ce que** l'évidement (20) est ménagé dans le siège de joint (16) avec une profondeur variable.

2. Organe d'arrêt (10) selon la revendication 1, dans lequel l'évidement (20) sur le pourtour intérieur du siège de joint (16) est réalisé sous la forme d'un évidement continu (20).

3. Organe d'arrêt (10) selon la revendication 1, dans lequel l'évidement (20) sur le pourtour intérieur du siège de joint (16) comprend plusieurs évidements partiels.

4. Organe d'arrêt (10) selon la revendication 3, dans lequel les évidements partiels sont espacés les uns des autres de façon régulière sur le pourtour.

5. Organe d'arrêt (10) selon la revendication 3 ou 4, dans lequel l'évidement (20) s'étend plus ou moins loin le long du sens axial du siège de joint (16).

6. Organe d'arrêt (10) selon l'une des revendications précédentes, dans lequel l'évidement (20) sur le pourtour intérieur du siège de joint (16) est réalisé en forme d'arc.

7. Organe d'arrêt (10) selon l'une des revendications précédentes, dans lequel l'évidement (20) sur le pourtour intérieur du siège de joint (16) présente des sections droites.

8. Organe d'arrêt (10) selon la revendication 7, dans lequel l'évidement (20) est réalisé en forme de coin, de triangle, de trapèze et/ou en dents de scie.

9. Organe d'arrêt (10) selon l'une des revendications précédentes, dans lequel le siège de joint (16) est configuré pour être réalisé d'un seul tenant avec le corps d'une prise d'eau.

10. Organe d'arrêt (10) selon la revendication 9, dans lequel le siège de joint (16) est configuré pour être réalisé d'un seul tenant avec une colonne montante de la prise d'eau.

11. Organe d'arrêt (10) selon l'une des revendications 1 à 8, comprenant en outre un siège de soupape principal qui est configuré comme le joint de siège (16).

12. Prise d'eau comprenant un organe d'arrêt (10) qui comprend un corps de soupape principal (12) et un siège de joint (16) qui peuvent être amenés en contact étanche l'un avec l'autre, le siège de joint (16) présentant un pourtour intérieur qui est muni au moins par endroits d'un évidement (20), l'évidement (20) étant réalisé dans une section du siège de joint (16) et pouvant être franchi par le corps de soupape principal (12) pour ouvrir et fermer l'organe d'arrêt (10), **caractérisée en ce que** l'évidement (20) est ménagé dans le siège de joint (16) avec une profondeur variable.

13. Prise d'eau selon la revendication 12, dans laquelle le siège de joint (16) est réalisé d'un seul tenant avec le corps de la prise d'eau.

14. Prise d'eau selon la revendication 12 ou 13, comprenant en outre une colonne montante, le siège de joint (16) et la colonne montante étant réalisés d'un seul tenant.

15. Prise d'eau selon la revendication 12, comprenant en outre un siège de soupape principal qui est configuré comme le siège de joint.

16. Siège de soupape principal pour une prise d'eau, le siège de soupape principal pouvant être engagé de façon amovible dans une section d'un organe d'arrêt de la prise d'eau, de telle sorte que le siège de soupape principal et un corps de soupape principal contenu dans la prise d'eau peuvent être amenés en contact étanche l'un avec l'autre, le siège de soupape principal présentant un pourtour intérieur qui est muni au moins par endroits d'un évidement, l'évidement étant réalisé dans une section du siège de soupape principal et pouvant être franchi par le corps de soupape principal pour ouvrir et fermer l'organe d'arrêt, **caractérisé en ce que** l'évidement est ménagé dans le siège de soupape principal avec une profondeur variable.
